# EUROPÄISCHE PATENTSCHRIFT

(11) **EP 1 978 396 B1**
(45) Veröffentlichungstag und Bekanntmachung des Hinweises auf die Patenterteilung: **21.11.2012**
(21) Anmeldenummer: 08102798.9
(22) Anmeldetag: 20.03.2008
(51) Int. Cl.: G02B 27/01, G02B 27/00

(54) **Abbildungseinrichtung und Verfahren zur Abbildung**
Display device and display method
Dispositif d'imagerie et procédé d'imagerie

(30) Priorität: 02.04.2007 DE 102007015877
(43) Veröffentlichungstag der Anmeldung: 08.10.2008
(73) Patentinhaber: ROBERT BOSCH GMBH, 70442 Stuttgart (DE)
(72) Erfinder: Eschler, Johannes, 71254, Ditzingen (DE); Noack, Christoph, 71701, Schwieberdingen (DE); Grzesik, Axel, 70197, Stuttgart (DE)

(56) Entgegenhaltungen:
- EP-A2- 1 333 410
- DE-A1-102005 037 797
- US-A- 5 506 595
- US-A1- 2006 022 808

## Beschreibung

### Stand der Technik

Die Erfindung geht aus von einer Abbildungseinrichtung oder einem Verfahren zur Abbildung nach Gattung der unabhängigen Ansprüche. Aus der WO 01/45080 A1 ist bereits eine interaktive Anzeige in einem Fahrzeug mit einem Head-up-Display bekannt, mit dem Text oder Grafiken in das Sichtfeld eines Insassen eines Fahrzeugs dargestellt werden können. Die Position eines Fahrerkopfes wird dabei über Abstandssensoren im Fahrzeug gemessen. Der Fahrersitz und auch die Abbildung des Head-up-Displays werden auf die gemessene Kopfposition des Fahrers eingestellt.

Aus der gattungsbildenden US 5,506,595 A ist eine Fahrzeuganzeige zur Darstellung eines virtuellen Bildes auf einer Windschutzscheibe bekannt, bei der die Position eines Fahrzeugsitzes ausgewertet wird und die Parameter zur Steuerung der optischen Achse der Projektionseinrichtung die Sitzposition und die Neigung des Sitzes berücksichtigen.

Aus der DE 10 2005 037 797 A1 ist ein System und ein Verfahren zur automatischen Kalibrierung einer Projektionseinrichtung bekannt, bei der eine Kameraeinrichtung vorgesehen ist, mit der ein Kalibriermuster auf einer Projektionsfläche aufgenommen wird. Eine Steuereinheit ist vorgesehen, um in Abhängigkeit von den von der mindestens einen Kameravorrichtung erfassten Signalen eines Kalibriermusters einer automatischen Einstellung der Projektionseinrichtung vorzusehen. Ferner ist es auch möglich, dass die Einstellung automatisch über die Abfrage von Spiegel- und/oder Sitzpositionen erfolgt.

Aus der US 2006/0022808 A1 wird als virtuelles Bild ein visueller Stimulus für die Führung des Fahrers in der Windschutzscheibe ausgegeben.

Aus der EP 1333 410 A2 ist ein Head-Up-System bekannt, bei dem die Augenposition des Fahrers erfasst wird.

### Offenbarung der Erfindung

### Vorteile der Erfindung

Die erfindungsgemäße Abbildungseinrichtung für ein virtuelles Bild in einem Fahrzeug hat demgegenüber den Vorteil, dass eine Positionierung eines virtuellen Bildes in Abhängigkeit von einer Einstellung eines Fahrzeugteils erfolgt. Indem eine Abschätzung einer idealen Abbildungsrichtung und eines idealen Abbildungsortes des virtuellen Bildes auf eine Windschutzscheibe oder einen Combiner aus der Position eines Fahrzeugteils hergeleitet wird, kann auf eine Messung der Kopfposition des Fahrers verzichtet werden. Zugleich wird ein virtuelles Bild aber bereits so positioniert, dass es für einen Fahrer zumindest sichtbar und wahrscheinlich auch bereits sogar gut sichtbar ist. Hierdurch kann vermieden werden, dass ein Fahrer nach einem Einsteigen in ein Fahrzeug das virtuelle Bild zunächst gar nicht sieht und somit auch eine Justage erschwert wird, da der Nutzer nicht erkennen kann, in welche Richtung eine Justage vorgenommen werden müsste. Indem anhand der Einstellung eines Fahrzeugteils zumindest grob abgeschätzt werden kann, an welcher Stelle und in welche Richtung das virtuelle Bild womöglich abzubilden ist, kann das virtuelle Bild zumindest nach dieser Abschätzung sichtbar für den Fahrer abgebildet werden.

Weiterhin wird erfindungsgemäß nach einer automatisch vorgegebenen Positionierung dem Nutzer die Möglichkeit zur Nachjustage zu geben. Da er das virtuelle Bild wahrscheinlich bereits sieht, kann er die Nachjustage auf einfache Weise vornehmen, da er nach einer von ihm vorgenommenen Einstellung sofort das Ergebnis in der Anzeige sehen kann.

Durch die in den abhängigen Ansprüchen aufgeführten Maßnahmen sind vorteilhafte Weiterbildungen und Verbesserungen der in dem unabhängigen Anspruch angegebenen Abbildungseinrichtung möglich. Weiterhin wird erfindungsgemäß eine Speichereinheit für Ansteuerungsdaten vorgesehen, in der ein Zusammenhang zwischen einer Einstellung eines Fahrzeugteils und der Positionierung des virtuellen Bildes abgelegt ist. Hierdurch ist es möglich, dass für verschiedene Fahrer, die Fahrzeugteile gegebenenfalls unterschiedlich einstellen, jeweils eine passende Positionierung des virtuellen Bildes vorhanden ist. Ferner ist es hierdurch möglich, einer Einstellung eines Fahrzeugteiles unmittelbar eine Position eines virtuellen Bildes zuzuordnen und zu speichern. Ein Nutzer, der das virtuelle Bild für sich einmal bereits genau eingestellt hat, kann mit der Einstellung eines Fahrzeugteils, beispielsweise des Fahrzeugsitzes, auf seine Bedürfnisse bereits unmittelbar die von ihm abgespeicherte Positionierung des virtuellen Bildes abrufen.

Es ist ferner vorteilhaft, zusätzlich eine Identifizierungseinheit vorzusehen, mit der sich der Nutzer zur Einstellung einer gespeicherten Positionierung eines virtuellen Bildes identifizieren kann, so dass eine von dem Fahrzeugteil abhängige Einstellung des virtuellen Bildes nur bei einer erstmaligen Positionierung im Fahrzeug vorgenommen zu werden braucht, während im Nachgang anhand der Identifizierungseinheit entsprechende Informationen über die Positionierung des virtuellen Bildes abgerufen und automatisch eingestellt werden.

Ferner ist es vorteilhaft, zur Einstellung der Abbildung des virtuellen Bildes einen verstellbaren Spiegel vorzusehen, da über einen verstellbaren Spiegel eine Positionsänderung auf einfache Weise möglich ist.

Ferner ist es vorteilhaft, die Positionierung des virtuellen Bildes und damit indirekt die sich hieraus ergebende Kopfposition des Fahrers für andere Fahrzeugsysteme verfügbar zu machen, beispielsweise für eine Airbag-Ansteuerung oder für eine Einstellung eines Rückspiegels.

Entsprechende Vorteile ergeben sich für das erfindungsgemäße Verfahren zur Abbildung eines virtuellen Bildes, bei dem die Abbildung in Abhängigkeit von der räumlichen Einstellung eines Fahrzeugteils eingestellt wird. Insbesondere ist es vorteilhaft, die Einstellung des Fahrersitzes zu berücksichtigen, da dieses Fahrzeugteil von einem Fahrer im Allgemeinen zu Beginn einer Fahrt auf seine Körpergröße eingestellt wird. Entsprechendes ergibt sich für eine Einstellung eines Innenspiegels bzw. eines Außenspiegels des Fahrzeugs, der auch auf einen Fahrer ausgerichtet sein muss. Entsprechend ist es auch möglich, die verschiedenen Einstellungen im Zusammenhang auszuwerten und aus mehreren Einstellungen von Fahrzeugteilen eine Kopfposition und damit eine vorteilhafte Position des virtuellen Bildes abzuschätzen. Entsprechend kann auch eine Einstellung eines Lenkrades, insbesondere eine Höheneinstellung des Lenkrades, herangezogen werden.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine seitliche Ansicht eines vorderen Innenraums eines Fahrzeugs mit einer erfindungsgemäßen Abbildungseinrichtung,
- Figur 2: eine Ansicht einer Windschutzscheibe eines Fahrzeugs mit einer erfindungsgemäßen Abbildung eines virtuellen Bildes.

### Ausführungsformen der Erfindung

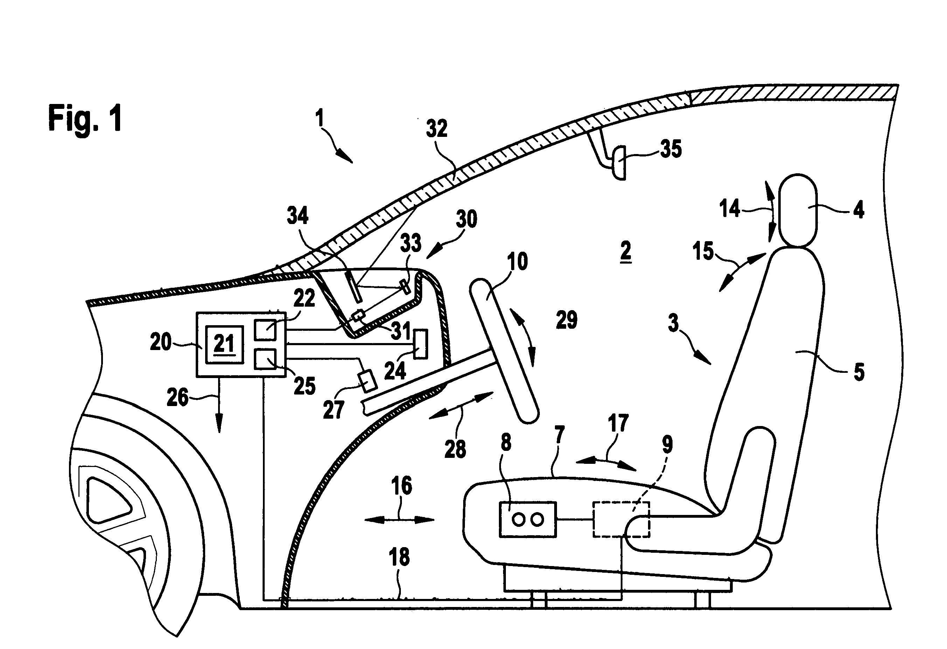

In der Figur 1 ist ein Fahrer-Bereich eines Innenraums 2 eines Kraftfahrzeugs 1 gezeigt. Der Fahrer nimmt auf dem Fahrersitz 3 platz, wobei die einzelnen Komponenten des Fahrersitzes 3 verstellbar sind, um die Sitzposition an die Körperverhältnisse des Fahrers anzupassen. So ist die Kopfstütze 4 höhenverstellbar, angedeutet durch die Pfeildarstellung 14. Die Neigung der Rückenlehne 5 ist verstellbar, angedeutet durch die Pfeildarstellung 15. Ferner ist der Sitz hinsichtlich seines Abstandes zu einem Lenkrad 10 verstellbar, angedeutet durch die Pfeildarstellung 16. Ferner kann auch die Sitzhöhe bzw. die Neigung der Sitzfläche 7 verstellt werden, angedeutet durch die Pfeildarstellung 17. Eine Steuerung des Sitzes kann in einer ersten Ausführungsform über Bedienelemente 8 erfolgen, die beispielsweise an einer Seitenfläche der Sitzfläche 7 angeordnet sind. Die Bedienelemente 8 sind bevorzugt mit einer Steuereinheit 9 verbunden, die in der Figur 1 nicht gezeigte Stellmotoren ansteuert. Über die Stellmotoren können die einzelnen Teile 4, 5, 7 des Fahrersitzes 3 entsprechend der Vorgabe eines Benutzers eingestellt werden. In einer weiteren Ausführungsform ist es auch möglich, dass durch entsprechende mechanische Elemente ein Fahrer die Position des Fahrzeugsitzes einstellen kann. In diesem Fall erfasst die Steuereinheit 9 die von dem Fahrer manuell vorgenommene Einstellung.

Die Sitzpositions-Daten werden über eine Datenverbindung 18 an eine Steuereinheit 20 einer Abbildungseinrichtung weitergeleitet. Die Steuereinheit 20 weist eine Recheneinheit 21 auf, die einen darzustellenden Bildinhalt berechnet und in Ansteuerungssignale für eine Abbildungseinheit 30 umrechnet. Die Abbildungseinheit 30 weist eine Bildquelle 31 auf, die mit einem aktiven oder mit einem passiven Display ausgeführt ist.

Das von der Bildquelle erzeugte Licht wird über eine Umlenkeinheit in Richtung der Windschutzscheibe 32 des Fahrzeugs 1 umgelenkt, so dass das durch Spiegelung an der Windschutzscheibe 32 entstehende virtuelle Bild für den Fahrer, der auf dem Fahrersitz 3 sitzt, sichtbar ist. In einer Ausführungsform weist die Umlenkeinheit hierzu einen ersten Spiegel 33 und einen zweiten Spiegel 34 auf. Der erste Spiegel 33 tastet das abzubildende virtuelle Bild in X-Y-Richtung regelmäßig ab. Der zweite Spiegel 34 wird so eingestellt, dass das Licht zur Darstellung des virtuellen Bildes an einer gewünschten Position auf der Oberfläche der Windschutzscheibe 32 auftrifft. In einer anderen Ausführungsform kann anstelle der Abbildung in Richtung der Windschutzscheibe 32 auch eine Abbildung in Richtung einer reflektierende Fläche, einem sogenannten Combiner, vorgenommen werden, der zusätzlich zur einer Windschutzscheibe im Fahrzeug angeordnet ist. Die Ansteuerung der Umlenkeinheit 33, 34 wird ebenfalls von der Steuereinheit 20 vorgenommen.

Aus den Einstellungsdaten des Fahrersitzes 3 berechnet die Recheneinheit 21 eine Position des virtuellen Bildes, an dessen Stelle das Licht der Bildquelle 31 abgebildet wird. Diese Position bestimmt, aus welchem Raumwinkelbereich, der sogenannten Eye-Box, das virtuelle Bild im Fahrzeuginnenraum 2 gut sichtbar ist. Hierzu greift die Recheneinheit 21 auf eine Speichereinheit 22 zu, in der ein Zusammenhang zwischen verschiedenen möglichen Sitzpositionen und einer Position des virtuellen Bildes abgelegt ist. Nach dem Auslesen der eingestellten Sitzposition wird diese nunmehr von der Recheneinheit 21 verarbeitet, so dass die Umlenkeinheit zur Abbildung des virtuellen Bildes, insbesondere der zweite Spiegel 34 in der hier gezeigten Ausführungsform, an die berechnete Position des virtuellen Bildes angepasst wird und eine Abbildung entsprechend erfolgt. Die in dem Speicher 22 abgelegten Daten können beispielsweise bei der Konstruktion des Fahrzeugs empirisch gewonnen werden, wobei in Abhängigkeit von der Einstellung des Fahrersitzes für verschiedene Größen eines Fahrers eine entsprechende gut geeignete Ablese-Position des virtuellen Bildes gespeichert wird. Zwischen diesen Positionen kann jeweils beispielsweise eine lineare Näherung erfolgen oder beispielsweise mittels Methoden maschinellen Lernens eine entsprechende Vorgabe der Ablese-Position erfolgen.

Erfindungsgemäß kann ein Benutzer nun über eine Bedieneinheit 24 eine manuelle Einstellung der Position des virtuellen Bildes auf der Windschutzscheibe 32 vornehmen. Er kann das Bild dabei bevorzugt in horizontaler und/oder in vertikaler Richtung auf der Fläche der Windschutzscheibe 32 bewegen. Zudem kann er die von ihm nunmehr eingestellte Position in einem weiteren Speicher 25 der Steuereinheit 20 ablegen. Über die Bedieneinheit 24 kann er sich zu einem späteren Zeitpunkt identifizieren und die gespeicherte Position des virtuellen Bildes auf der Windschutzscheibe 32 erneut über eine Identifikation abrufen.

Die Steuereinheit 20 verfügt ferner über eine Schnittstelle 26, über die die gespeicherte Position des virtuellen Bildes anderen Fahrzeugsystemen zur Verfügung gestellt werden kann. So ist es beispielsweise möglich, eine Ausrichtung eines Airbags oder eine Schallausgabe beispielsweise eines Autoradios an die Position des Fahrers auf den Fahrersitz 3 anzupassen. Hierbei kann die über die Schnittstelle 26 ausgegebene Position des Fahrersitzes bzw. die Position des virtuellen Bildes oder, in einer weiteren Ausführungsform, eine berechnete Kopfposition des Fahrers, für die weiteren Systeme ausgewertet werden. Ferner ist es möglich, diese Information für ein Einstellen der Position eines Zweitmonitors in der Instrumententafel, für ein Ausrichten eines Mikrofonarrays für eine Spracheingabe bzw. eine Telefonfreisprecheinrichtung, für eine Position für destruktive Audio-Interferenz zum Eliminieren störender Geräusche oder für eine Stellung der Lüftungsdüsen direkt auf oder weg vom Kopf eines Fahrers zu nutzen.

In einer weiteren Ausführungsform kann ergänzend oder alternativ zu der Positionierung des Fahrersitzes eine Einstellung des Lenkrades 10 zur Abschätzung der Position des virtuellen Bildes herangezogen werden. Hierzu ist an dem Lenkrad 10 ein Sensor 27 angeordnet, über den eine Höheneinstellung, angedeutet durch einen Pfeil 28, oder eine Neigungseinstellung, angedeutet durch einen Pfeil 29, des Lenkrades 10 erfasst werden kann. Auch aus der Position des Lenkrades 10 kann auf die Sitzposition des Fahrers im Fahrzeug geschlossen werden. In einer weiteren Ausführungsform kann auch eine Einstellung eines Innenspiegels 35 zur Abschätzung einer Fahrerposition im Fahrzeug berücksichtigt werden. Neben einer Einstellung eines Innenspiegels als Fahrzeugteil, auf deren Basis eine Positionierung des virtuellen Bildes erfolgt, kann auch eine Position des Außenspiegels 44 herangezogen werden. Hierzu wird von einer Einstelleinheit 45 über eine Schnittstelle 46 die eingestellte Position des Außenspiegels an die Steuereinheit 20 weitergeleitet.

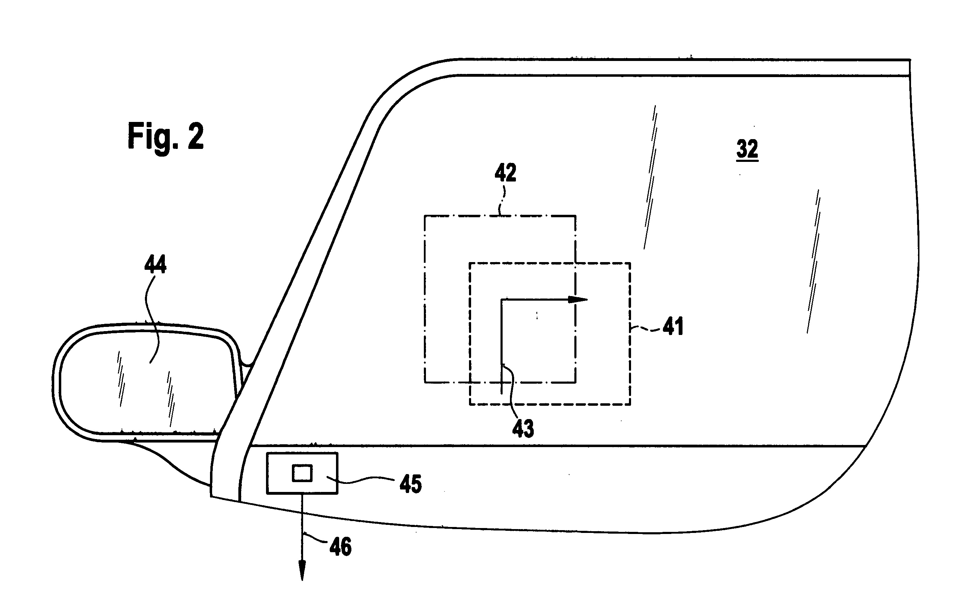

In der Figur 2 ist eine Ansicht auf die Windschutzscheibe 32 des Fahrzeugs 1 dargestellt, bei der zwei verschiedene Positionen eines virtuellen Bildes durch eine gestrichelte Linie 41 bzw. eine gepunktete Linie 42 gekennzeichnet sind. In dem virtuellen Bild ist in der hier dargestellten Ausführungsform in der gestrichelten Umrahmung ein Navigationspfeil 43 dargestellt. Es können auch Geschwindigkeitsinformationen in Form eines Zahlenwertes oder einer Skalenanzeige dargestellt werden. Ferner können auch weitere Informationen, wie beispielsweise ein Symbol für eine Fahrzeugfehlfunktion, zur Anzeige gebracht werden.

Setzt sich ein Fahrer in das Fahrzeug, so sieht er gegebenenfalls das virtuelle Bild erst innerhalb des Rahmens 42. Stellt er nun den Sitz weiter nach hinten, so verschiebt sich die Eye-Box weiter nach unten infolge einer automatischen Korrektur der Position des virtuellen Bildes in der Anzeige. Das Bild wird nun für den Fahrer in dem gestrichelten Rahmen 41 dargestellt.

## Patentansprüche

1. Abbildungseinrichtung für ein virtuelles Bild in einem Fahrzeug, wobei eine Positionierung des virtuellen Bildes einstellbar ist mit einer Schnittstelle (18) zu einer Erfassungseinheit zur Erfassung einer räumlichen Einstellung wenigstens eines Fahrzeugteils und mit einer Recheneinheit (21) zur Positionierung des virtuellen Bildes in Abhängigkeit von der räumlichen Einstellung des wenigstens einen Fahrzeugteils, mit einer Eingebeeinheit (24) zur Nachkorrektur der Position des virtuellen Bildes nach einer automatisch vorgenommenen Positionierung In Abhängigkeit von der Einstellung des wenigstens einen Fahrzeugteils und mit einer Speichereinheit (22, 25) zur Speicherung von Ansteuerungsdaten zur Festlegung der Abhängigkeit zwischen der räumlichen Einstellung des wenigstens eines Fahrzeugteils und der Positionierung des virtuellen Bildes, **gekennzeichnet durch** eine weitere Speichereinheit, in der die über die Eingebe einheit (24) manuell eingestellte Position des virtuellen Bildes auf der Windschutzscheibe durch den Benutzer in einem weiteren Speicher (25) ablegbar ist.

2. Abbildungseinrichtung nach Anspruch 1, **gekennzeichnet durch** eine Identifizierungseinheit (24) zur Ermittlung eines Nutzers und zur Einstellung einer gespeicherten Positionierung des virtuellen Bildes.

3. Abbildungseinrichtung nach einem der vorhergehenden Ansprüche, **dadurch gekennzeichnet, dass** die Abbildungseinrichtung wenigstens einen verstellbaren Spiegel (33, 34) zur Positionierung des virtuellen Bildes aufweist.

4. Abbildungseinrichtung nach einem der vorhergehenden Ansprüche, **gekennzeichnet durch** eine Schnittstelle (26) zur Ausgabe einer Positionierungsinformation zur Verwendung für wenigstens ein weiteres Fahrzeugsystem.

5. Verfahren zur Abbildung eines virtuellen Bildes in einem Fahrzeug, wobei eine räumliche Einstellung eines Fahrzeugteils erfasst und eine Abbildung des virtuellen Bildes in Abhängigkeit von der räumlichen Einstellung des wenigstens einen Fahrzeugteils eingestellt wird, wobei über eine Eingebeeinheit (24) eine Nachkorrektur der Position des virtuellen Bildes nach einer automatisch vorgenommenen Positionierung in Abhängigkeit von der Einstellung des wenigstens einen Fahrzeugteils erfolgt und wobei Ansteuerungsdaten zur Festlegung der Abhängigkeit zwischen der räumlichen Einstellung des wenigstens eines Fahrzeugteils und der Positionierung des virtuellen Bildes in einer Speichereinheit (22, 25) gespeichert werden, **dadurch gekennzeichnet, dass** in einer weiterern Speichereinheit die über die Eingebe einheit (25) manuell eingestellte Position des virtuellen Bildes auf der Windschutzscheibe durch den Benutzer in einem weiteren speicher (25) ablegbor ist.

6. Verfahren nach Anspruch 5, **dadurch gekennzeichnet, dass** als eine räumliche Einstellung eines Fahrzeugteils eine Einstellung eines Fahrersitzes berücksichtigt wird.

7. Verfahren nach einem der Ansprüche 5-6, **dadurch gekennzeichnet, dass** als eine räumliche Einstellung eines Fahrzeugteils eine Einstellung wenigstens eines Spiegels des Fahrzeugs berücksichtigt wird.

8. Verfahren nach einem der Ansprüche 5-7, **dadurch gekennzeichnet, dass** als eine räumliche Einstellung eines Fahrzeugtells eine Höheneinstellung wenigstens eines Lenkrads berücksichtigt wird.

9. Verfahren nach einer der Ansprüche 5-8, **dadurch gekennzeichnet, dass** aus der Einstellung des wenigstens einen Fahrzeugteils eine Kopfposition ermittelt wird und eine Abbildung des virtuellen Bildes in Abhängigkeit von der gespeicherten Kopfposition erfolgt.

## Claims

1. Display device for a virtual image in a vehicle, wherein a positioning of the virtual image can be adjusted with an interface (18) with a detection unit for detecting a spatial setting of at least one vehicle part, and with a computing unit (21) for positioning the virtual image as a function of the spatial setting of the at least one vehicle part, having an input unit (24) for subsequently correcting the position of the virtual image after an automatic positioning as a function of the setting of the at least one vehicle part, and having a memory unit (22, 25) for storing actuation data for defining the dependence between the spatial setting of the at least one vehicle part and the positioning of the virtual image, **characterized by** a further memory unit in which the position of the virtual image, set manually by means of the input unit (24), on the windscreen can be stored by the user in a further memory (25).

2. Display device according to Claim 1, **characterized by** an identification unit (24) for determining a user and for setting a stored positioning of the virtual image.

3. Display device according to one of the preceding claims, **characterized in that** the display device has at least one adjustable mirror (33, 34) for positioning the virtual image.

4. Display device according to one of the preceding claims, **characterized by** an interface (26) for outputting positioning information for use for at least one further vehicle system.

5. Method for displaying a virtual image in a vehicle, wherein a spatial setting of a vehicle part is detected, and a display of the virtual image is set as a function of the spatial setting of the at least one vehicle part, wherein by means of an input unit (24) a subsequent correction of the position of the virtual image after an automatic positioning takes place as a function of the setting of the at least one vehicle part, and wherein actuation data for defining the dependence between the spatial setting of the at least one vehicle part and the positioning of the virtual image is stored in a memory unit (22, 25), **characterized in that**, in a further memory unit, the position of the virtual image, set manually by means of the input unit (25), on the windscreen can be stored by the user in a further memory (25).

6. Method according to Claim 5, **characterized in that** a setting of a vehicle seat is taken into account as a spatial setting of a vehicle part.

7. Method according to one of Claims 5 and 6, **characterized in that** a setting of at least one mirror of the vehicle is taken into account as a spatial setting of a vehicle part.

8. Method according to one of Claims 5-7, **characterized in that** a vertical setting of at least one steering wheel is taken into account as a spatial setting of a vehicle part.

9. Method according to one of Claims 5-8, **characterized in that** a head position is determined from the setting of the at least one vehicle part and the virtual image is displayed as a function of the stored head position.

## Revendications

1. Dispositif de représentation en image d'une image virtuelle dans un véhicule, un positionnement de l'image virtuelle pouvant être réglé à l'aide d'une interface (18) d'unité de détection servant à détecter une position dans l'espace d'au moins une partie de véhicule et avec une unité de calcul (21) servant à positionner l'image virtuelle en fonction de la position dans l'espace de l'au moins une partie de véhicule, avec une unité de saisie (24) servant à corriger a posteriori la position de l'image virtuelle à la suite d'un positionnement réalisé automatiquement en fonction de la position de l'au moins une partie de véhicule et avec une unité de mémorisation (22, 25) servant à mémoriser les données de commande servant à déterminer la dépendance entre la position dans l'espace de l'au moins une partie de véhicule et le positionnement de l'image virtuelle, **caractérisé par** la présence d'une unité de mémorisation supplémentaire dans laquelle la position de l'image virtuelle sur le pare-brise réglée manuellement par l'utilisateur par le biais de l'unité de saisie (24) peut être mémorisée dans une mémoire (25) supplémentaire.

2. Dispositif de représentation en image selon la revendication 1, **caractérisé par** la présence d'une unité d'identification (24) servant à détecter un utilisateur et à régler un positionnement mémorisé de l'image virtuelle.

3. Dispositif de représentation en image selon l'une quelconque des revendications précédentes, **caractérisé en ce que** le dispositif de représentation en image comporte au moins un miroir réglable (33, 34) servant au positionnement de l'image virtuelle.

4. Dispositif de représentation en image selon l'une quelconque des revendications précédentes, **caractérisé par** la présence d'une interface (26) permettant de transmettre une information de positionnement pouvant être utilisée par au moins un système supplémentaire du véhicule.

5. Procédé de représentation en image d'une image virtuelle dans un véhicule, une position dans l'espace d'une partie de véhicule étant détectée et une représentation en image de l'image virtuelle étant réglée en fonction de la position dans l'espace de l'au moins une partie de véhicule, une correction a posteriori de la position de l'image virtuelle étant réalisée par le biais d'une unité de saisie (24) à la suite d'un positionnement réalisé automatiquement en fonction de la position de l'au moins une partie de véhicule et les données de commande servant à déterminer la dépendance entre la position dans l'espace de l'au moins une partie de véhicule et le positionnement de l'image virtuelle étant mémorisées dans une unité de mémorisation (22, 25), **caractérisé en ce que** la position de l'image virtuelle sur le pare-brise réglée manuellement par l'utilisateur par le biais de l'unité de saisie (25) dans une unité de mémorisation supplémentaire peut être mémorisée dans une mémoire (25) supplémentaire prévue dans une unité de mémorisation supplémentaire.

6. Procédé selon la revendication 5, **caractérisé en ce que** la position dans l'espace d'une partie de véhicule prise en compte est une position du siège de conducteur.

7. Procédé selon l'une quelconque des revendications 5 à 6, **caractérisé en ce que** la position dans l'espace d'une partie de véhicule prise en compte est une position d'au moins un rétroviseur du véhicule.

8. Procédé selon l'une quelconque des revendications 5 à 7, **caractérisé en ce que** la position dans l'espace d'une partie de véhicule prise en compte est une position en hauteur d'au moins un volant de direction.

9. Procédé selon l'une quelconque des revendications 5 à 8, **caractérisé en ce que** l'on calcule à partir de la position de l'au moins une partie de véhicule une position de tête et que la représentation en image de l'image virtuelle est effectuée en fonction de la position de tête mémorisée.
